# EUROPÄISCHE PATENTSCHRIFT

(11) **EP 0 414 292 B1**
(45) Veröffentlichungstag und Bekanntmachung des Hinweises auf die Patenterteilung: **25.08.1993**
(21) Anmeldenummer: 90202050.2
(22) Anmeldetag: 26.07.1990
(51) Int. Cl.: B01D 53/34

(54) **Verfahren zur Abscheidung saurer Verbindungen aus heissen Gasen**
Process for removing of acid compounds from hot gases
Procédé d'élimination de composés acides de gaz chauds

(30) Priorität: 23.08.1989 DE 3927794
(43) Veröffentlichungstag der Anmeldung: 27.02.1991
(73) Patentinhaber: METALLGESELLSCHAFT Aktiengesellschaft, 60015 Frankfurt (DE)
(72) Erfinder: Weber, Ekkehard, Dr., D-4300 Essen 17 (DE)

(56) Entgegenhaltungen:
- DE-A- 2 539 810
- US-A- 3 671 185
- US-A- 4 053 554
- US-A- 4 357 308

## Beschreibung

Die Erfindung betrifft ein Verfahren zur Abscheidung der sauren Verbindungen HF, HCl, SO₂, SO₃ und/oder H₂S aus Gasen, die bei der Verbrennung oder Vergasung fossiler Brennstoffe anfallen, eine Temperatur von 1 200 bis 1 800°C haben und aschefrei sind.

Es ist bekannt, daß Verbrennungsgase, die eine hohe Temperatur aufweisen, vorteilhaft zur Erzeugung elektrischer Energie verwendet werden können, da ihr Wärmeinhalt von einer Gasturbine mit sehr gutem Wirkungsgrad in elektrische Energie umgewandelt wird. Der restliche Wärmeinhalt des die Gasturbine verlassenden Verbrennungsgases kann in vorteilhafter Weise zur Erzeugung von Dampf in einem Dampfkessel genutzt werden. Aus energetischer und wirtschaftlicher Sicht ist also die Erzeugung von Verbrennungsgasen anzustreben, die eine möglichst hohe Temperatur aufweisen, wobei diese Temperatur in der Praxis zwischen 1 200 und 1 800°C liegt. Es ist auch bekannt, daß bei der Vergasung fossiler Brennstoffe unter erhöhtem Druck Gase anfallen, die einen hohen Gehalt an CO und H₂ aufweisen und daher entweder zur Durchführung chemischer Synthesen oder als Brennstoff verwendet werden können. Diese Gase haben ebenfalls eine Temperatur von 1 200 bis 1 800°C und können vor ihrer Verarbeitung zu chemischen Produkten oder ihrer weiteren Verbrennung einer Gasturbine mit dem Ziel der Energiegewinnung vorteilhaft zugeführt werden.

Die bei der Verbrennung und Vergasung fossiler Brennstoffe anfallende Asche liegt bei Temperaturen zwischen 1 200 und 1 800°C in schmelzflüssiger Form vor und muß aus den Gasen abgetrennt werden, um die Gasturbine vor mechanischer Erosion zu schützen. Die Abtrennung der flüssigen Asche, die in den bei der Vergasung und Verbrennung fossiler Brennstoffe anfallenden Gasen suspendiert ist, kann nach den Verfahren erfolgen, die in den DE-A-37 20 963, DE-A-37 33 337, DE-A-37 41 604 und DE-A-39 07 457 vorgeschlagen worden sind. Es wurde auch bereits vorgeschlagen, die in den heißen Verbrennungsgasen enthaltenen Alkali- und Schwermetallverbindungen abzutrennen, da auch diese Substanzen chemische Korrosion an den Gasturbinen hervorrufen.

Die bei der Verbrennung und Vergasung fossiler Brennstoffe anfallenden heißen Gase enthalten nicht nur flüssige Ascheteilchen sowie gasförmige Alkali- und Schwermetallverbindungen, sondern auch die in den Brennstoffen vorhandenen Elemente Fluor, Chlor und Schwefel in Form der sauren Verbindungen HF, HCl, SO₂, SO₃ und/oder H₂S. Diese Schadstoffe müssen ebenfalls abgetrennt werden. Hierzu sind die Verfahren ungeeignet, die zur Abscheidung flüssiger Asche eingesetzt werden können.

Der Erfindung liegt daher die Aufgabe zugrunde, ein Verfahren der eingangs genannten Art zu schaffen, bei dem die heißen Gase für den Betrieb einer Gasturbine verwendet werden, wobei das Verfahren die sichere Abtrennung der sauren Verbindungen HF, HCl, SO₂, SO₃ und/oder H₂S gestattet, über einen längeren Zeitraum betriebssicher arbeitet und die Abtrennung der flüssigen Asche sowie der gasförmigen Alkali- und Schwermetallverbindungen nicht behindert.

Die der Erfindung zugrundeliegende Aufgabe wird dadurch gelöst, daß die heißen Gase in einer Gasturbine auf 500 bis 1000°C abgekühlt und dann mit einer Schmelze aus Oxiden, Hydroxiden und/oder Carbonaten des Li, Na, K, Mg und/oder Ca bei einer Temperatur von 500 bis 1 000°C in Kontakt gebracht werden. Es hat sich in überraschender Weise gezeigt, daß diese Verbindungen bei den vorgenannten Temperaturen nur in sehr geringer Menge verdampfen und die sauren Verbindungen einbinden, wobei eine Lösung entsteht, aus der die gebildeten Halogenide, Sulfite und Sulfate nicht sublimieren, wie dies beim Vorhandensein fester Bodenkörper beobachtet wird. Die schmelzflüssige Phase bindet die ansonsten bei den hohen Temperaturen flüchtigen Verbindungen ein und verhindert so zuverlässig die Schädigung der nachgeschalteten Apparate. Es wurde auch nicht festgestellt, daß die in der Schmelze gelösten Sulfite und Sulfate bei den in Rede stehenden Temperaturen zersetzt werden. Die Abkühlung der entaschten, heißen Gase kann durch Energieentzug in einer Gasturbine erfolgen, da eine durch die sauren Bestandteile verursachte Korrosion oberhalb 500°C nicht festgestellt werden konnte.

Obwohl aus der DE-PS 2 149 443 bekannt ist, daß die in einem heißen Verbrennungsgas vorhandenen Schwefeloxide dadurch beseitigt werden können, daß das Gas bei Temperaturen von mindestens 350°C mit einer geschmolzenen Salzmischung in Kontakt gebracht wird, die Alkalicarbonate als aktive Absorptionsmittel enthält, wobei bevorzugt mit einer Salzmischung aus Carbonaten des Lithiums, Natriums und Calciums bei Temperaturen zwischen 400 und 500°C gearbeitet wird, war es für den Fachmann nicht vorhersehbar, daß die entaschten, heißen Verbrennungsgase in einer Gasturbine bis zu einer Temperatur von 500 bis 1 000°C abgekühlt werden können, ohne daß es durch die sauren Verbindungen HF, HCl, SO₂, SO₃ und/oder H₂S zu Schädigungen der Gasturbine kommt.

Insbesondere durch die Kenntnis der DE-OS 25 39 810, die die Verwendung von Metallcarbonatschmelzen zur Reinigung von Abgasen im Temperaturbereich von 427 bis 927°C beschreibt, mußte der Fachmann eine Schädigung von Gasturbinen durch saure gasförmige Verbindungen erwarten, weil die sauren Verbindungen gemäß der DE-OS 25 39 810 aus den heißen Gasen vor deren Einsatz in Gasturbinen oder ähnlichen Brennkraftmaschinen entfernt werden.

Auch aus der US-PS 3 671 185 ist ein Verfahren bekannt, bei dem Oxide des Schwefels und Schwefelwasserstoff aus Verbrennungsabgasen im Temperaturbereich zwischen 815 und 1 093°C durch den Kontakt mit geeigneten Schmelzen von Natrium-, Kalium- und Lithiumcarbonaten entfernt werden. Die Schmelzen können gegebenenfalls die entsprechenden Metallhydroxide und Oxide enthalten. Durch Prallbleche wird der direkt aus einem Gaserzeuger stammende Gasstrom auf die Oberfläche der in Röhren strömenden Schmelze gelenkt. Hinweise darauf, daß die heißen Gase vor ihrer Reinigung in einer Gasturbine genutzt werden können, sind dieser Schrift nicht zu entnehmen. Gleiches gilt auch für das aus der US-PS 4 053 554 bekannte Verfahren, bei dem schwefelhaltige Verbindungen aus 260 bis 370°C heißen Gasströmen durch Absorption in flüssigen Salzschmelze- entfernt werden. Die schwefelhaltigen Verbindungen werden anschließend in einem Desorber durch Temperaturerhöhung wieder aus der Salzschmelze ausgetrieben. Gerade im Hinblick auf diese Schrift konnte der Fachmann nicht erwarten, daß die sauren Verbindungen sich durch das erfindungsgemäße Verfahren sicher entfernen lassen.

Das Schmelzverhalten der Oxide, Hydroxide und/oder Carbonate kann entsprechend der Erfindung in vorteilhafter Weise dadurch verbessert werden, daß die Schmelze 1 bis 50 Gew.% SiO₂, Al₂O₃ und/oder Fe₂O₃ enthält. Durch diese Verbindungen wird einerseits der Schmelzpunkt der alkalisch wirkenden Verbindungen erhöht und andererseits auch eine Einbindung eventuell noch vorhandener Schwermetallverbindungen erleichtert. Besonders vorteilhaft ist es, wenn die Verbindungen SiO₂, Al₂O₃ und/oder Fe₂O₃ in Form von Asche eingebracht werden, wenn also die Schmelze 1 bis 50 Gew.% Asche enthält.

Nach der Erfindung ist ferner vorgesehen, daß die Schmelze im heißen Gasstrom dispergiert und nach einer Kontaktzeit von 0,1 bis 10 sec abgetrennt wird. Das Dispergieren der Schmelze kann vorteilhaft durch Versprühen mittels Düsen oder durch Zerstäuben mittels eines rotierenden Tellers erfolgen. Die nach der Erfindung vorgesehene Kontaktzeit wird in einer Reaktionsstrecke erreicht, in der die dispergierten Tröpfchen der Schmelze sowie das zu reinigende Gas eine Flugstromwolke bilden. Zur Abtrennung der dispergierten Schmelze wird nach der Erfindung ein Prallabscheider verwendet, auf dessen Prallfläche die Flugstromwolke mit einem Anströmwinkel von etwa 90° auftrifft. Die Abscheidungsleistung des Prallabscheiders kann erfindungsgemäß dadurch verbessert werden, daß dem Prallabscheider ein Zyklon vorgeschaltet ist, der insbesondere die größeren Tröpfchen der Schmelze sicher abtrennt. Ferner ist nach der Erfindung vorgesehen, daß dem Prallabscheider ein keramisches Filterelement nachgeschaltet ist, mit dem eine quantitative Abtrennung der Schmelze ermöglicht wird.

Es hat sich gezeigt, daß die Schmelze, insbesondere wenn sie SiO₂, Al₂O₃ und/oder Fe₂O₃ enthält, gleichzeitig mit den sauren gasförmigen Bestandteilen auch kleinere Mengen der gasförmigen Alkali- und Schwermetallverbindungen aufnimmt. In einigen Fällen hat es sich nach der Erfindung aber als vorteilhaft erwiesen, wenn die Abscheidung der sauren Verbindungen nach der Abtrennung der flüssigen Asche sowie der gasförmigen Alkali- und Schwermetallverbindungen erfolgt. Diese Verfahrensvariante ermöglicht eine besonders betriebssichere Arbeitsweise und gewährleistet die nahezu quantitative Abtrennung aller Schadstoffe aus den bei der Verbrennung und Vergasung fossiler Brennstoffe anfallenden heißen Gasen.

Der Gegenstand der Erfindung wird nachfolgend anhand von zwei Ausführungsbeispielen näher erläutert.

Ein Verbrennungsgas, das eine Temperatur von 800°C hatte und 481 Vpm HCl enthielt, wurde durch eine NaOH-Schmelze geleitet. Hierbei wurde HCl zu 100 % aus den Verbrennungsgasen ausgewaschen. Der Waschprozeß konnte über mehrere 100 Betriebsstunden störungsfrei durchgeführt werden.

Das Verbrennungsgas mit einem HCl-Gehalt von 481 Vpm wurde bei 800°C durch eine Schmelze hindurchgeleitet, die zu je 50 % aus NaOH und KOH bestand. Während mehrerer 100 Betriebsstunden wurde HCl von der Schmelze zu 95 % aus dem Verbrennungsgas ausgewaschen.

## Patentansprüche

1. Verfahren zur Abscheidung der sauren Verbindungen HF, HCl, SO₂, SO₃ und/oder H₂S aus Gasen, die bei der Verbrennung oder Vergasung fossiler Brennstoffe anfallen, eine Temperatur von 1 200 bis 1 800°C haben und aschefrei sind, dadurch gekennzeichnet, daß die heißen Gase in einer Gasturbine auf 500 bis 1000°C abgekühlt und dann mit einer Schmelze aus Oxiden, Hydroxiden und/oder Carbonaten des Li, Na, K, Mg und/oder Ca bei einer Temperatur von 500 bis 1 000°C in Kontakt gebracht werden.

2. Verfahren nach Anspruch 1, dadurch gekennzeichnet, daß die Schmelze 1 bis 50 Gew.% SiO₂, Al₂O₃ und/oder Fe₂O₃ enthält.

3. Verfahren nach den Ansprüchen 1 bis 2, dadurch gekennzeichnet, daß die Schmelze 1 bis 50 Gew.% Asche enthält.

4. Verfahren nach den Ansprüchen 1 bis 3, dadurch gekennzeichnet, daß die Schmelze im heißen Gasstrom dispergiert und nach einer Kontaktzeit von 0,1 bis 10 sec abgetrennt wird.

5. Verfahren nach Anspruch 4, dadurch gekennzeichnet, daß die Abtrennung in einem Prallabscheider erfolgt.

6. Verfahren nach Anspruch 5, dadurch gekennzeichnet, daß dem Prallabscheider ein Zyklon nachgeschaltet ist.

7. Verfahren nach Anspruch 5, dadurch gekennzeichnet, daß dem Prallabscheider ein keramisches Filterelement nachgeschaltet ist.

8. Verfahren nach den Ansprüchen 1 bis 7, dadurch gekennzeichnet, daß die Abscheidung der sauren Verbindungen nach der Abtrennung der flüssigen Asche sowie der gasförmigen Alkali- und Schwermetallverbindungen erfolgt.

## Claims

1. A method for separating off the acidic compounds HF, HCl, SO₂, SO₃ and/or H₂S from gases which are produced during the combustion or gasification of fossil fuels, have a temperature of 1,200 to 1,800°C and are ash-free, characterised in that the hot gases are cooled to 500 to 1,000°C in a gas turbine and are then brought into contact with a melt consisting of oxides, hydroxides and/or carbonates of Li, Na, K, Mg and/or Ca at a temperature of 500 to 1,000°C.

2. A method according to Claim 1, characterised in that the melt contains 1 to 50% by weight SiO₂, Al₂O₃ and/or Fe₂O₃.

3. A method according to Claims 1 to 2, characterised in that the melt contains 1 to 50% by weight ash.

4. A method according to Claims 1 to 3, characterised in that the melt is dispersed in the hot gas stream and is separated off after a contact time of 0.1 to 10 sec.

5. A method according to Claim 4, characterised in that the separating takes place in an impact separator.

6. A method according to Claim 5, characterised in that the impact separator is succeeded by a cyclone.

7. A method according to Claim 5, characterised in that the impact separator is succeeded by a ceramic filter element.

8. A method according to Claims 1 to 7, characterised in that the separation of the acidic compounds takes place after the separation of the liquid ash and of the gaseous alkali and heavy metal compounds.

## Revendications

1. Procédé pour séparer les composés acides que sont HF, HCl, SO₂, SO₃ et/ou H₂S de gaz qui se forment lors de la combustion ou de la gazéification de combustibles fossiles, qui ont une température de 1200 à 1800°C et qui sont exempts de cendre, caractérisé en ce qu'il consiste à refroidir les gaz chauds dans une turbine à gaz jusqu'à une température de 500 à 1000°C, puis à les mettre en contact à une température de 500 à 1000°C avec une masse fondue constituée d'oxydes, d'hydroxydes et/ou de carbonates de Li, Na, K, Mg et/ou Ca.

2. Procédé suivant la revendication 1, caractérisé en ce que la masse fondue contient de 1 à 50% en poids de SiO₂, Al₂O₃ et/ou Fe₂O₃.

3. Procédé suivant la revendication 1 ou 2, caractérisé en ce que la masse fondue contient de 1 à 50% en poids de cendres.

4. Procédé suivant l'une des revendications 1 à 3, caractérisé en ce qu'il consiste à disperser la masse fondue dans un courant de gaz et à la séparer après une durée de contact de 0,1 à 10 secondes.

5. Procédé suivant la revendication 4, caractérisé en ce qu'il consiste à effectuer la séparation dans un séparateur à percussion.

6. Procédé suivant la revendication 5, caractérisé en ce qu'un cyclone est monté en aval du séparateur à percussion.

7. Procédé suivant la revendication 5, caractérisé en ce qu'un élément filtrant en céramique est monté en aval du séparateur à percussion.

8. Procédé suivant l'une des revendications 1 à 7, caractérisé en ce qu'il consiste à effectuer la séparation des composés acides après avoir séparé les cendres liquides ainsi que les composés gazeux de métal alcalin et de métaux lourds.
